# EUROPÄISCHE PATENTSCHRIFT

(11) **EP 1 068 261 B1**
(45) Veröffentlichungstag und Bekanntmachung des Hinweises auf die Patenterteilung: **05.06.2002**
(21) Anmeldenummer: 99916835.4
(22) Anmeldetag: 19.03.1999
(51) Int. Cl.: C08J 9/16, C08J 9/12, B29C 44/10

(54) **VERFAHREN ZUR HERSTELLUNG WASSEREXPANDIERBARER STYROLPOLYMERISATE**
METHOD FOR PRODUCING WATER EXPANDABLE STYRENE POLYMERS
PROCEDE DE FABRICATION DE POLYMERES STYRENE EXPANSIBLES A L'AIDE D'EAU

(30) Priorität: 25.03.1998 DE 19813108
(43) Veröffentlichungstag der Anmeldung: 17.01.2001
(73) Patentinhaber: BASF AKTIENGESELLSCHAFT, 67056 Ludwigshafen (DE)
(72) Erfinder: GLÜCK, Guiscard, D-55129 Mainz (DE); HAHN, Klaus, D-67281 Kirchheim (DE); DODEL, Peter, D-76835 Rhodt (DE)
(86) Internationale Anmeldenummer: EP9901841
(87) Internationale Veröffentlichungsnummer: WO9948955

(56) Entgegenhaltungen:
- EP-A- 0 305 862
- PATENT ABSTRACTS OF JAPAN vol. 96, no. 6, 28. Juni 1996 (1996-06-28) & JP 08 041236 A (SEKISUI PLASTICS CO LTD), 13. Februar 1996 (1996-02-13)

## Beschreibung

Die Erfindung betrifft ein Verfahren zur Herstellung wasserexpandierbarer Styrolpolymerisate (WEPS) durch Extrusion von Polystyrol unter Zusatz von Wasser.

Teilchenförmige expandierbare Styrolpolymerisate (EPS) können z.B. hergestellt werden durch Extrusion von Polystyrol unter Zusatz eines flüchtigen organischen Treibmittels. Übliche Treibmittel sind Kohlenwasserstoffe, insbesondere Pentan. Aus Umweltschutzgründen muß bei der Herstellung und Verarbeitung von EPS emittiertes Pentan wieder aufgefangen werden. Dies ist aufwendig und kostenintensiv. Es ist daher sinnvoll, diese organischen Substanzen längerfristig durch unbedenklichere Treibmittel zu ersetzen, beispielsweise durch Wasser.

In einer Dissertation der Universität Eindhoven "Water Expandable Polystyrene" von J.J. Crevecoeur aus dem Jahr 1997 ist ein Verfahren zur Herstellung von WEPS beschrieben, bei dem zunächst Wasser in feiner Verteilung in Styrol mit Hilfe von oberflächenaktiven Substanzen emulgiert, das Styrol bis zu einem Umsatz von 50 % polymerisiert, die Mischung unter Phasenumkehr in Wasser suspendiert und das Styrol schließlich mit Hilfe von Peroxid-Initiatoren auspolymerisiert wird. Als oberflächenaktive Substanzen werden amphiphile Emulgatoren eingesetzt, z.B. Natrium-Bis-(2-ethylhexyl)-sulfosuccinat oder Natrium-Styrolsulfonat oder Blockcopolymere aus Polystyrol-Blöcken und Polystyrolsulfonat-Blöcken. Alle diese Substanzen weisen sowohl einen hydrophilen als auch einen hydrophoben Rest auf und sind daher in der Lage, Wasser in Styrol zu emulgieren.

Dieses Verfahren hat den Nachteil, daß es in zwei Stufen durchgeführt wird: Erst wird Wasser in der Styrol/Polystyrol-Mischung emulgiert, dann wird unter Phasenumkehr die organische Phase in Wasser suspendiert.

Aufgabe der Erfindung war es daher, ein einfacheres, einstufiges Verfahren zur Herstellung von WEPS zu entwickeln.

Diese Aufgabe wird erfindungsgemäß dadurch gelöst, daß man eine Schmelze eines Styrolpolymerisats mit 3 bis 20 Gew.-% Wasser und einem Emulgierhilfsmittel unter Druck vermischt, die Schmelze in ein unter Druck stehendes Kühlmedium auspreßt und dabei den ausgepreßten und abgekühlten Strang granuliert.

Bevorzugtes Styrolpolymerisat ist Polystyrol, es können aber auch Copolymere des Styrols mit bis zu 20 Gew.-% an Comonomeren, z.B. Alkylstyrole, Divinylbenzol, Acrylnitril, 1,1-Diphenylethen oder α-Methylstyrol, sowie Mischungen von Styrolpolymerisaten mit bis zu 20 Gew.-% anderer Polymerisate, wie Kautschuke oder Polyphenylenether eingesetzt werden.

Das erfindungsgemäße Verfahren wird zweckmäßigerweise in einem Extruder durchgeführt, wobei Temperaturen von 180 bis 230°C, vorzugsweise 190 bis 220°C angewandt werden. Das Wasser wird dabei zweckmäßigerweise über eine Dosierpumpe eingepreßt, bevorzugt in Mengen von 5 bis 15 Gew.-% und insbesondere von 8 bis 13 Gew.-%, bezogen auf das Styrolpolymerisat. Das Emulgierhilfsmittel wird in Mengen von vorzugsweise 0,1 bis 12 Gew.-% und insbesondere von 0,5 bis 8 Gew.-% zugesetzt. Bevorzugte Emulgierhilfsmittel sind amphiphile organische Verbindungen, die sowohl hydrophile Gruppen, wie Hydroxyl-,Carboxyl- oder Aminreste, als auch hydrophobe Gruppen, wie Alkyl- oder Arylreste tragen. Sie bewirken, daß das Wasser, unterstützt durch die Scherung im Extruder, sich homogen in sehr feinen Tröpfchen in der Schmelze verteilt. Außerdem bewirken sie, daß das Wasser in den fertigen EPS-Perlen nicht ausschwitzen kann, sondern lagerstabil in den Perlen verbleibt.

Das Emulgierhilfsmittel kann direkt als solches zugesetzt werden. Beispiele für geeignete Substanzen sind Salze langkettiger organischer Säuren, wie z.B. das Natriumsalz des Sulfobernsteinsäure-di-2-ethylhexylesters, Natrium-bis-(2-ethylhexyl)-sulfosuccinat, Blockcopolymere aus Polystyrolblöcken und Polystyrolsulfonatblöcken, ferner quartäre Ammoniumalkylsulfonate, oxalkylierte Ammoniumsalze, sowie hydroxylgruppenhaltige Ester aus Fettsäuren oder Fettalkoholen.

Das Emulgierhilfsmittel kann auch durch recyclierte Polystyrol-Partikelschaumstoffe (EPS-Recyclat) eingebracht werden, die von der EPS-Herstellung her 0,2 bis 2 Gew.-% üblicher Beschichtungsmittel, z.B. Antistatika, Antiverklebungsmittel und/oder Mittel zur Verkürzung der Kühlzeit enthalten. Diese Beschichtungsmittel sind meist ebenfalls amphiphile organische Verbindungen. In diesem Fall kann das Styrolpolymerisat ganz oder teilweise aus EPS-Recyclat bestehen. Bevorzugt wird das EPS-Recyclat in Mengen von 5 bis 50 Gew.-% dem Styrolpolymerisat zugemischt.

Ferner ist es möglich, das Emulgierhilfsmittel in Form von thermolabilen organischen Verbindungen einzubringen, die bei Extrusionstemperaturen in amphiphile organische Verbindungen zersetzt werden. Beispiele sind Halogenverbindungen, wie Hexabromcyclododecan, 1,1,2,2-Tetrabromethan und Chlorparaffin; organische Peroxide, wie Dibenzoylperoxid und Dicumylperoxid; Phosphorverbindungen, wie Arylphosphate.

Es ist zweckmäßig, bei der Extrusion übliche Keimbildner, z.B. Talkum oder Polyethylenwachse zuzusetzen, ferner organische Bromverbindungen, wie Hexabromcyclododecan als Flammschutzmittel, vorzugsweise zusammen mit Flammschutzsynergisten. In diesem Fall müssen etwas höhere Mengen als üblich, z.B. 0,5 bis 5 Gew.%, zugesetzt werden, da ein Teil der Bromverbindungen bei den hohen Extrusionstemperaturen zerfällt.

Die Temperatur, bei der die Schmelze aus der Düse ausgepreßt wird, sollte höher liegen als die Glastemperatur des Styrolpolymerisats, vorzugsweise im Bereich zwischen 120 und 180°C. Damit bei diesen Temperaturen das im Styrolpolymerisat enthaltene Wasser nicht verdampft und ein vorzeitiges Verschäumen bewirkt, muß rasch und unter Druck abgekühlt werden. Dazu wird die Schmelze in ein Kühlmedium, vorzugsweise in ein unter Raumtemperatur und unter einem Druck von 2 bis 20, vorzugsweise 5 bis 15 bar, stehendes Wasserbad eingepreßt. Dort wird der abgekühlte Schmelzstrang granuliert.

Bei der Granulierung entstandene WEPS-Partikel enthalten 2 bis 20, insbesondere 5 bis 15 Gew.-% Wasser. Ihre Partikelgröße beträgt 0,2 bis 5, vorzugsweise 0,5 bis 2 mm. Sie können mit 110 bis 140°C heißer Luft oder überhitztem Wasserdampf zu Schaumstoffpartikeln geschäumt werden. Ein besonders elegantes Schäumverfahren, welches zu Schaumpartikeln mit sehr niedriger Schüttdichte führt, ist in der Deutschen Patentanmeldung P 198 12 854.1 beschrieben.

Die WEPS-Schaumpartikel können wie herkömmliche EPS-Schaumpartikel zu Schaumstoff-Platten, - Blöcken oder -Formteilen verschweißt werden, die als Isolier- oder Verpackungsmaterialien verwendet werden können.

Die in dem Beispiel genannten Prozente beziehen sich auf das Gewicht.

### Beispiel:

Eine Vormischung aus 25 kg Polystyrol PS 158 K (BASF AG) und 12,5 g Talkum HP 325 wird in einem Zweischneckenextruder (ZSK 30) bei einer Massetemperatur von maximal 220°C aufgeschmolzen. Zu der Schmelze im Extruder wird zusätzlich noch 5 Gew.-% Lutensit A-BO (BASF AG) und 10 Gew.-% Wasser zudosiert. Die aus der Extruderdüse (Düsentemperatur 160°C) austretende Schmelze wird mittels eines Unterwassergranulators der Firma Gala (USA) granuliert. Die Granulierung wird unter 10 bar Druck durchgeführt. Dieser Druck wird über eine Drossel (Schlauch mit 80 m Länge) erzielt, die zwischen Granulierung und Trockner eingebaut ist. Man erhält ein perlförmiges Granulat mit einem mittleren Durchmesser von circa 1,5 mm. (Lutensit A-BO ist das Natriumsalz des Sulfobernsteinsäure-di-2-ethylhexylesters).

Das Granulat wird mit 130°C heißer Luft aufgeschäumt. Dabei expandieren die Perlen auf das 10-fache ihres ursprünglichen Schüttgewichtes von 600 g/l. Die vorgeschäumten Perlen werden anschließend in einem Strom von trockener, 70°C warmer Luft vom Restwasser befreit. Schließlich werden die Perlen in einem konventionellen Vorschäumer für EPS mittels Wasserdampf weiter geschäumt. Nach dreimaligem Schäumen mit Wasserdampf und dazwischenliegender jeweiliger Trocknung von Restwasser erhält man Schaumstoffperlen mit einer Schüttdichte von 10 g/l.

## Patentansprüche

1. Verfahren zur Herstellung von Wasser als einzigem Treibmittel enthaltenden Styrolpolymerisaten durch Vermischen einer Schmelze des Styrolpolymerisats mit 3 bis 20 Gew.-% Wasser und einem Emulgierhilfsmittel unter Druck, Auspressen der Schmelze in ein unter erhöhtem Druck stehendes Kühlmedium und Granulieren des abgekühlten Strangs.

2. Verfahren nach Anspruch 1, **dadurch gekennzeichnet, daß** das Emulgierhilfsmittel in Mengen von 0,1 bis 12 Gew.-% zugesetzt wird.

3. Verfahren nach Anspruch 1, **dadurch gekennzeichnet, daß** das Emulgierhilfsmittel eine amphiphile organische Verbindung ist, die sowohl hydrophile als auch hydrophobe Gruppen trägt.

4. Verfahren nach Anspruch 1, **dadurch gekennzeichnet, daß** das Vermischen von Styrolpolymerisat mit Wasser und dem Emulgierhilfsmittel in einem Extruder bei Temperaturen zwischen 180 und 230°C durchgeführt wird.

5. Verfahren nach Anspruch 1, **dadurch gekennzeichnet, daß** die Schmelze in ein Wasserbad ausgepreßt wird, welches Raumtemperatur aufweist und unter Druck von 2 bis 20 bar steht.

6. Verwendung der nach Anspruch 1 hergestellten, 2 bis 15 Gew.-% Wasser enthaltenden Styrolpolymerisate zur Herstellung von Schaumstoffen.

## Claims

1. A process for preparing styrene polymers comprising water as sole blowing agent, by mixing a melt of the styrene polymer with from 3 to 20% by weight of water and with an emulsifying agent under superatmospheric pressure, extruding the melt into a cooling medium maintained at an elevated pressure and pelletizing the cooled extrudate.

2. A process as claimed in claim 1, wherein the amount used of the emulsifying agent is from 0.1 to 12% by weight.

3. A process as claimed in claim 1, wherein the emulsifying agent is an amphiphilic organic compound which contains both hydrophilic and hydrophobic groups.

4. A process as claimed in claim 1, wherein the styrene polymer is mixed with water and with the emulsifying agent in an extruder at from 180 to 230°C.

5. A process as claimed in claim 1, wherein the melt is extruded into a waterbath maintained at room temperature and at a pressure of from 2 to 20 bar.

6. The use, for producing foams, of the styrene polymers prepared as claimed in claim 1 and comprising from 2 to 15% by weight of water.

## Revendications

1. Procédé pour la préparation de polymères du styrène contenant de l'eau en tant qu'unique agent porogène par mélange d'une masse fondue du polymère de styrène avec 3 à 20 % en poids d'eau et un produit auxiliaire émulsionnant sous pression, refoulement de la masse fondue dans un milieu réfrigérant sous pression et formation de granulés à partir du boudin refroidi.

2. Procédé selon la revendication 1, **caractérisé par le fait que** l'on ajoute le produit auxiliaire émulsionnant en quantité de 0 ,1 à 12 % en poids.

3. Procédé selon la revendication 1, **caractérisé par le fait que** le produit auxiliaire émulsionnant est un composé organique amphiphile qui contient à la fois des groupes hydrophiles et des groupes hydrophobes.

4. Procédé selon la revendication 1, **caractérisé par le fait que** le mélange du polymère de styrène avec l'eau et le produit auxiliaire émulsionnant est réalisé dans une extrudeuse à des températures de 180 à 230°C.

5. Procédé selon la revendication 1, **caractérisé par le fait que** la masse fondue est refoulée dans un bain d'eau à température ambiante et sous une pression de 2 à 20 bar.

6. Utilisation des polymères du styrène contenant 2 à 15 % en poids d'eau préparés selon la revendication 1 pour la fabrication de matières mousses.
